**Europäisches Patentamt**

**European Patent Office**

**Office européen des brevets**

(19)

(11) Veröffentlichungsnummer : **0 284 770 B2**

(12)

# NEUE EUROPÄISCHE PATENTSCHRIFT

(45) Veröffentlichungstag der neuen Patentschrift :
**24.03.93 Patentblatt 93/12**

(51) Int. Cl.$^5$ : **B60R 21/00**

(21) Anmeldenummer : **88102632.2**

(22) Anmeldetag : **23.02.88**

(54) **Auslöseschaltung für ein Schutzsystem.**

(30) Priorität : **26.03.87 DE 3709894**

(43) Veröffentlichungstag der Anmeldung :
**05.10.88 Patentblatt 88/40**

(45) Bekanntmachung des Hinweises auf die
Patenterteilung :
**06.06.90 Patentblatt 90/23**

(45) Bekanntmachung des Hinweises auf die
Entscheidung über den Einspruch :
**24.03.93 Patentblatt 93/12**

(84) Benannte Vertragsstaaten :
**DE ES FR GB IT SE**

(56) Entgegenhaltungen :
**DE-A- 2 745 620**
**DE-C- 3 413 768**
**GB-A- 2 005 887**
**US-A- 4 166 641**

(73) Patentinhaber : **SIEMENS
AKTIENGESELLSCHAFT
Wittelsbacherplatz 2
W-8000 München 2 (DE)**

(72) Erfinder : **Swart, Marten, Ing.(grad.)
Albrecht-Altdorfer-Ring 70
W-8407 Obertraubling (DE)**

Jouve, 18, rue Saint-Denis, 75001 PARIS

**Beschreibung**

Die Erfindung betrifft eine Auslöseschaltung für ein Schutzsystem gemäß dem Oberbegriff von Anspruch 1.

Ein solches Schutzsystem ist z.B. ein Kfz-Airbag-System mit einem Verzögerungssensor, der bei Erreichen eines bestimmten Verzögerungswertes einen Ansprechschalter ansteuert. Zusätzlich ist ein Kraftfahrzeug meist mit Sicherheitsgurten ausgerüstet. Kommt es zu einem Unfall bei kleinerer Geschwindigkeit, so ist normalerweise der angelegte Sicherheitsgurt allein ausreichend zum Schutz der Insassen. Das Auslösen des Airbags ist erst bei einem Unfall mit höherer Geschwindigkeit erforderlich. Ein solches Schutzsystem ist in der deutschen Patentanmeldung 3 413 768 beschrieben.

Dabei ist der Ansprechschalter zu einem Ansprechstufenschalter erweitert. Dieser Ansprechstufenschalter wird bei einem Aufprall mit einer kleineren Geschwindigkeit und einem dementsprechend kleineren Verzögerungswert von dem Verzögerungssensor auf einen ersten Schaltkontakt gesteuert (Ansprechfall 1) und bei einem größeren Verzögerungswert auf einen zweiten Schaltkontakt (Ansprechfall 2).

Die Stellung eines Zustandsschalters, hier eines Gurtschalters, gibt an, ob der Sicherheitsgurt angelegt ist. Demgemäß wird ein Wahlschalter angesteuert, der den Auslöser für den Airbag entweder mit dem ersten oder dem zweiten Schaltkontakt des Ansprechstufenschalters verbindet.

Ist der Gurtschalter geschlossen, also der Gurt angelegt, wird der Wahlschalter so gestellt, daß eine Auslösung des Airbags nur beim Ansprechfall 2 erfolgt.

Ist der Gurtschalter dagegen offen, also der Gurt nicht angelegt, wird der Wahlschalter so gestellt, daß bereits beim Ansprechfall 1 eine Auslösung erfolgt und damit der Airbag die Schutzfunktion des nichtangelegten Gurtes übernimmt.

Die Steuerung des Wahlschalters erfolgt gemäß dem Stand der Technik über Relais. Für eine ordnungsgemäße Funktion der Auslöseschaltung muß die vom Gurtschalter bestimmte Schaltstellung des Wahlschalters in jedem Fall erhalten bleiben. Ein dafür geeignetes bistabiles Relais ist jedoch aufgrund der verlangten Stoßfestigkeit von 100 g und Schwingfestigkeit von 5 g bei einer Frequenz von 20 bis 30 Hz zur Zeit noch nicht verfügbar.

Diese Anforderungen erfüllen nur Relais, die durch eine kontinuierlich vorhandene Erregerenergie in ihrer Schaltstellung gehalten werden. Dies bedingt jedoch einen permanenten Energieverbrauch im Bereitschaftsbetrieb der Auslöseschaltung, der nicht unbeträchtlich ist.

Ein weiteres Problem ist, daß es bei Unfällen vor der Auslösung des Airbags zur Zerstörung oder zum Abtrennen der die Erregerenergie liefernden Fahrzeugbatterie kommen kann. Damit ist die Schaltstellung des Wahlschalters dem Zufall überlassen.

Der Erfindung liegt deshalb die Aufgabe zugrunde, eine solche Auslöseschaltung derart auszuführen, daß im Bereitschaftsbetrieb keine Energie verbraucht wird. Außerdem müssen sämtliche Funktionen auch bei ausgefallener Energieversorgung des Kraftfahrzeugs gewährleistet bleiben.

Die erfindungsgemäße Lösung ist im Anspruch 1 gekennzeichnet.

Der Wahlschalter wird dabei durch einen oder mehrere elektronische Schalter ersetzt. Die verlangte Stoß- und Schwingfestigkeit ist bei solchen Halbleiterschaltern in jedem Fall gegeben. Außerdem ist die Funktionssicherheit höher als bei einem Relais und periodisch wiederholte, häufige Schalttests stellen kein Problem dar.

Da einerseits auch ein angesteuerter Halbleiterschalter kontinuierlich Steuerenergie verbraucht, andererseits aber dessen Schaltzeit sehr kurz ist, ist erfindungsgemäß weiter vorgesehen, den Halbleiterschalter erst bei einem der Ansprechfälle des Ansprechstufenschalters anzusteuern. Damit wird im Bereitschaftsbetrieb keinerlei Energie verbraucht. Ein Logikbaustein, der die Ansteuerung des Wahlschalters übernimmt, erhält die dazu notwendige Steuerenergie über den Ansprechstufenschalter von einer Energiequelle, die die Zündenergie für den Auslöser unabhängig von der normalen Energieversorgung liefert.

Die Erfindung wird anhand der Figuren näher erläutert. Dabei zeigen:

FIG 1 ein Prinzipschaltbild einer Auslöseschaltung für ein Airbag-System gemäß dem Stand der Technik,

FIG 2 ein Prinzipschaltbild einer erfindungsgemäßen Auslöseschaltung und

FIG 3 einen erfindungsgemäßen Logikbaustein.

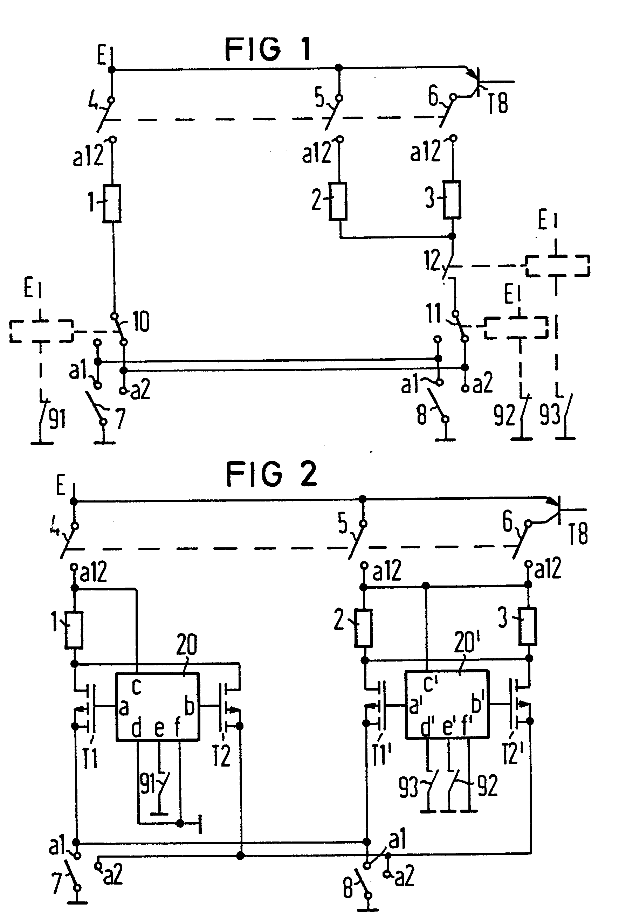

Die in FIG 1 dargestellte Auslöseschaltung ist für einen Fahrer- und einen Beifahrer-Airbag ausgelegt. Eine Zündpille 1 ist dabei der Auslöser für den Fahrer-Airbag. Der Beifahrer-Airbag muß aufgrund des fehlenden Lenkrades entsprechend größer sein als der Fahrer-Airbag und wird deshalb in zwei Stufen ausgelöst. Dementsprechend hat er zwei Zündpillen 2, 3, wobei die zweite Zündpille 3 verzögert ausgelöst wird.

Eine nicht dargestellte elektrische Energiequelle E ist über drei Ansprechstufenschalter 4, 5, 6 mit Schaltkontakten a12 mit den Zündpillen 1, 2, 3 verbunden. Zwischen die Energiequelle E und den Ansprechstufenschalter 6 ist zusätzlich ein Verzögerungstransistor T8 geschaltet, um die Auslösung der Zündpille 3 zu verzögern. Die Ansprechstufenschalter 4, 5, 6 sind mechanisch miteinander verbunden, was durch die gestrichelte

2

Linie angedeutet ist, und werden von einem nicht dargestellten Verzögerungssensor geschlossen, sobald der Verzögerungswert gleich oder größer als ein erster - unterer - Grenzwert ist.

Die Zündpille 1 ist weiterhin mit einem Wahlschalter 10 verbunden, der als Wechselschalter ausgebildet ist. Dieser Wahlschalter 10 verbindet die Zündpille 1 in einer Schaltstellung mit einem Schaltkontakt a1 von Ansprechstufenschaltern 7 und 8 und in der anderen Schaltstellung mit einem Schaltkontakt a2 der Ansprechstufenschalter 7 und 8. Die Ansprechstufenschalter 7 und 8 verbinden die Schaltkontakte a1 und a2 jeweils mit Masse.

Der Zündpillen 2 und 3 sind zusammengeschaltet und an einen Wahlschalter 12 gelegt, der als Ein-/Ausschalter ausgelegt ist. Dieser Wahlschalter 12 verbindet die Zündpillen 2 und 3 mit einem weiteren Wahlschalter 11, der als Wechselschalter ausgelegt ist. Dieser Wahlschalter 11 ist dann an den Schaltkontakten a1 und a2 der Ansprechstufenschalter 7, 8 so angeschlossen, wie bereits beim Wahlschalter 10 erläutert.

Die Ansprechstufenschalter 7, 8 sind von je einem nicht dargestellten Verzögerungssensor betätigt. Dieser steuert sie im Ansprechfall 1 - der Verzögerungswert liegt zwischen dem ersten und einem zweiten, größeren Grenzwert -, auf den jeweiligen Schaltkontakt a1 und im Ansprechfall 2 - der Verzögerungswert ist gleich oder größer als der zweite Grenzwert - auf den Schaltkontakt a2.

Eine erste Bedingung für die Auslösung der Zündpillen 1, 2, 3 und damit der beiden Airbags ist erfüllt, wenn die gekoppelten Ansprechstufenschalter 4, 5, 6 schließen und zusätzlich einer der beiden zueinander parallel geschalteten Ansprechstufenschalter 7, 8 auf einen der beiden Schaltkontakte a1 oder a2 schalten. Ob dabei bereits beim Ansprechfall 1, also über einen der Schaltkontakte a1 eine Auslösung erfolgt oder erst beim Ansprechfall 2 über einen der Schaltkontakte a2, bestimmt die jeweilige Stellung der Wahlschalter 10, 11, 12.

Der Wahlschalter 10 wird von einem Relais gesteuert, dessen Erregerspule über einen Fahrergurtschalter 91 ein- und ausgeschaltet wird. Bei angelegtem Gurt ist der Fahrergurtschalter 91 geschlossen, und das Relais steuert den Wahlschalter 10 in die in FIG 1 eingezeichnete Lage. Damit kann eine Auslösung der Zündpille 1 nur über den Schaltkontakt a2 erfolgen. Ist der Fahrergurt nicht angelegt, so ist der Fahrergurtschalter 91 offen und das Relais steuert den Wahlschalter 10 in die Stellung, die dem Schaltkontakt a1 zugeordnet ist. Dadurch kommt es über den Schaltkontakt a1, also bereits im Ansprechfall 1, zur Zündung der Zündpille 1.

Beim Beifahrer-Airbag ist wie beim Fahrer-Airbag der Wahlschalter 11 von einem Relais gesteuert, dessen Erregerspule von einem Beifahrergurtschalter 92 ein- und ausgeschaltet wird. Die Funktion ist gleich der zuvor erläuterten Funktion beim Fahrer-Airbag.

Im Stromkreis des Beifahrer-Airbags ist noch der weitere Wahlschalter 12 vorgesehen, der von einem Relais gesteuert wird, dessen Erregerspule von einem Sitzschalter 93 ein- und ausgeschaltet wird. Dieser Sitzschalter 93 ist bei nicht belegtem Sitz offen und hat als weiterer Zustandsschalter die Aufgabe, eine Auslösung des Beifahrer-Airbags bei nicht belegtem Sitz zu verhindern. Bei belegtem Sitz ist der Sitzschalter 93 geschlossen, wodurch das Relais den Wahlschalter 12 schließt und so eine Airbag-Auslösung erfolgen kann.

In FIG 2 ist nun das Prinzipschaltbild einer erfindungsgemäßen Auslöseschaltung gezeigt. Analog FIG 1 ist die Energiequelle E über die Ansprechstufenschalter 4, 5, 6 mit den Zündpillen 1, 2, 3 verbunden. Die Zündpille 1 ist weiter an den Drain-Anschluß eines VMOS-Transistors T1 und T2 gelegt. Die Zündpillen 2 und 3 sind in gleicher Weise mit den Drain-Anschlüssen von VMOS-Transistoren T1′ und T2′ verbunden. Die jeweiligen Source-Anschlüsse der VMOS-Transistoren T1 und T2 bzw. T1′ und T2′ sind wiederum an den Schaltkontakten a1 und a2 der Ansprechstufenschalter 7, 8 in gleicher Weise angeschlossen, wie die Wechselkontakte der Wahlschalter 10 und 11 aus FIG 1.

Die VMOS-Transistoren T1 und T2 bzw. T1′ und T2′ übernehmen die Funktion der Wahlschalter 10, 11, 12 aus FIG 1.

Die Ansteuerung der VMOS-Transistoren T1 und T2 bzw. T1′ und T2′ übernimmt ein Logikbaustein 20 bzw. 20′, der über einen Ausgang a bzw. a′ das Gate des VMOS-Transistors T1 bzw. T1′ und über einen Ausgang b bzw. b′ das Gate des VMOS-Transistors T2 bzw. T2′ ansteuert.

Die Logikbausteine 20 bzw. 20′ haben Eingänge c, d, e und f bzw. c′, d′, e′ und f′. Der Eingang c des Logikbausteins 20 ist an den versorgungsspannungsseitigen Anschluß der Zündpille 1 gelegt. Der Eingang c′ des Logikbausteins 20′ ist an die versorgungsspannungsseiten Anschlüsse der Zündpillen 2 und 3 angeschlossen. Der Eingang f bzw. f′ des Logikbausteins 20 bzw. 20′ ist jeweils mit Masse verbunden. Der Eingang d des Logikbausteins 20 ist ebenfalls mit Masse verbunden. Der Eingang e des Logikbausteins 20 ist über den Fahrergurtschalter 91 an Masse angeschlossen. Die Eingänge d′ und e′ des Logikbausteins 20′ sind dementsprechend über die Beifahrergurtschalter 92 und Sitzschalter 93 mit Masse verbunden.

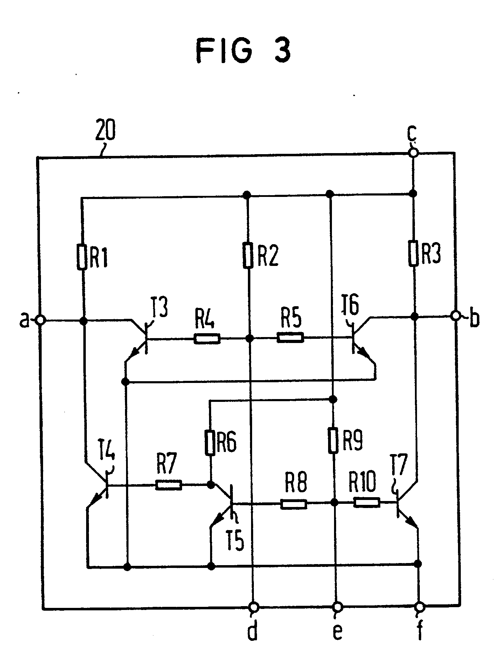

In FIG 3 ist ein Ausführungsbeispiel für einen Logikbaustein 20 dargestellt. Der Aufbau und die Funktion entspricht auch der des Logikbausteins 20′.

Der Logikbaustein 20 enthält ein Schaltnetzwerk, bestehend aus den Transistoren T3 bis T7 und Widerständen R1 bis R10. Ausgehend von den Ein-/Ausgängen a, b, c, d, e, f bestehen folgende Leitungsverbindungen:

- Eingang c verbunden mit jeweils einem Anschluß von R1, R2, R3, R6 und R9;
- Ausgang a verbunden mit dem anderen Anschluß von R1 und den Kollektoren von T3 und T4;
- Eingang d verbunden mit dem anderen Anschluß von R2 und jeweils einem Anschluß von R4 und R5;
- Eingang e verbunden mit dem anderen Anschluß von R9 und jeweils einem der Anschlüsse von R8 und R10;
- Eingang f verbunden mit den Emittern von T3, T4, T5, T6 und T7;
- Ausgang b verbunden mit dem anderen Anschluß von R3 und den Kollektoren von T6 und T7;

im Innern der Schaltung sind noch folgende Leitungsverbindungen vorgesehen:
- die Basis von T3 ist verbunden mit dem anderen Anschluß von R4;
- die Basis von T6 ist verbunden mit dem anderen Anschluß von R5;
- die Basis von T5 ist verbunden mit dem anderen Anschluß von R8;
- die Basis von T7 ist verbunden mit dem anderen Anschluß von R10;
- der Kollektor von T5 ist verbunden mit dem anderen Anschluß von R6 und einem Anschluß von R7;
- die Basis von T4 ist verbunden mit dem anderen Anschluß von R7.

Die Aufgabe des Logikbausteins 20 besteht darin, abhängig von den Schaltstellungen der Zustandsschalter an den Eingängen d, e die VMOS-Transistoren T1 und T2 über die Ausgänge a, b durchzuschalten bzw. zu sperren.

Die möglichen Fälle sollen nun anhand des Logikbausteins 20′ gemäß FIG 2 dargestellt werden. Im Ansprechfall 1 oder 2 sind die Ansprechschalter 5, 6 über den Schaltkontakt a12 geschlossen, so daß der Logikbaustein 20′ über den Eingang c′ mit Spannung versorgt wird. Der Sitzschalter 93 ist geschlossen, wenn der Sitz belegt ist und sonst offen. Der Beifahrergurtschalter 92 ist dementsprechend geschlossen, wenn der Gurt angelegt ist und sonst offen.

Fall 1 und 2:

- Der Sitz ist nicht belegt und dementsprechend der Sitzschalter 93 offen.

Damit fließt über den Eingang c′ ein Strom über R2 und R5 auf die Basis von T6 und über R2 und R4 auf die Basis von T3. Die Kollektor-Emitter-Strecken von T3 und T6 werden dementsprechend durchgeschaltet. Der Strom über R1 und R3, auf das jeweilige Gate von T1′ und T2′ wird demnach über T3 und T6 und den Eingang f′ nach Masse abgeleitet. T1′ und T2′ bleiben also in jedem Fall gesperrt, unabhängig von der Stellung des Beifahrergurtschalters 92.

Fall 3 und 4:

- Der Sitz ist belegt und dementsprechend der Sitzschalter 93 geschlossen.

Damit wird der über R2 kommende Strom zum Ansteuern von T3 und T6 über den geschlossenen Sitzschalter 93 nach Masse abgeleitet. Somit bleiben die Kollektor-Emitter-Strecken von T3 und T6 gesperrt. Die Ansteuerung von T1′ und T2′ hängt dann von der Stellung des Beifahrergurtschalters 92 ab.

Fall 3:

- Der Sitzschalter 93 ist geschlossen und der Gurt nicht angelegt, also der Beifahrergurtschalter 92 offen.

Damit fließt ein Strom über R9 und R8 auf die Basis von T5 und über R9 und R10 auf die Basis von T7. Die Kollektor-Emitter-Strecken von T5 und T7 werden dementsprechend durchgeschaltet. Ein Strom über R6 und R7 auf die Basis von T4 kommt dann nicht zustande, da dieser über R6 und die Kollektor-Emitter-Strecke von T5 nach Masse abgeleitet wird. Die Kollektor-Emitter-Strecke von T4 bleibt gesperrt. Ein Strom über R1 gelangt dementsprechend auf das Gate von T1′ und steuert diesem durch. T2′ bleibt dagegen gesperrt, da der Strom auf sein Gate über R3 über die Kollektor-Emitter-Strecke von T7 nach Masse abgeleitet wird.

Fall 4:

- Der Sitzschalter 93 ist geschlossen und der Gurt angelegt, also der Beifahrergurtschalter 92 ebenfalls geschlossen.

Damit bleiben die Kollektor-Emitter-Strecken von T5 und T7 gesperrt, da der über R9 kommende Strom auf ihre Basis über den Beifahrergurtschalter 92 nach Masse geleitet wird. Die Kollektor- Emitter-Strecke von T4 wird dagegen durchgeschaltet, da jetzt ein Strom über R6 und R7 auf dessen Basis fließen kann. Damit wird der Gatestrom von T1′ nach Masse abgeleitet und T1′ bleibt gesperrt. T2′ wird dagegen durchgeschaltet, da sein Gatestrom jetzt über R3 fließen kann.

4

Zur Verdeutlichung sind alle möglichen Fälle in der folgenden Tabelle dargestellt:

| Fall | Sitzschalter 93 | Beifahrer-Gurt-schalter 92 | T1' | T2' |
|---|---|---|---|---|
| 1 | Offen | Offen | gesperrt | gesperrt |
| 2 | Offen | Geschlossen | gesperrt | gesperrt |
| 3 | Geschlossen | Offen | leitend | gesperrt |
| 4 | Geschlossen | Geschlossen | gesperrt | leitend |

Für die Auslösung der Zündpillen 2, 3 gemäß FIG 2 ergibt sich demnach:
- Ist der Sitz nicht besetzt, gemäß Fall 1 und 2, so bleiben die VMOS-Transistoren T1' und T2' gesperrt und keine der Zündpillen 2, 3 kann auslösen.
- Ist der Sitz dagegen besetzt, so hängt die Auslösung, gemäß Fall 3 und 4, davon ab, ob der Gurt angelegt ist. Bei nichtangelegtem Gurt, gemäß Fall 3, ist T1' leitend und T2' bleibt gesperrt. Damit erfolgt die Auslösung der Zündpillen 2, 3 bereits beim Schalten der Ansprechstufenschalter 5, 6 und einem der Ansprechstufenschalter 7 oder 8 auf den Schaltkontakt al.
- Ist der Gurt dagegen angelegt, gemäß Fall 4, wird T2' leitend und Tl' bleibt gesperrt. Damit kann die Auslösung nur über die Schaltkontakte a2 der Ansprechstufenschalter 7, 8 erfolgen.

Für die Auslösung der Zündpille 1 in FIG 2 gilt prinzipiell das gleiche. Dabei ist lediglich der Sitzschalter 93 weggelassen, da der Fahrersitz immer besetzt ist. Der Eingang d des Logikbausteins 20 ist dementsprechend nach Masse verbunden, wodurch ein dauernd geschlossener Sitzschalter 93 simuliert wird.

Das Ausführungsbeispiel für den Logikbaustein 20 bzw. 20' gemäß FIG 3 stellt nur eine mögliche Ausführungsform für die Erfindung dar. Ein solcher Logikbaustein 20 bzw. 20' kann genauso durch eine andere Schaltungsanordnung bzw. andere elektrische oder elektronische Bauteile realisiert werden. Ebenso könnte diese Aufgabe ein entsprechend beschalteter Mikrocomputer übernehmen.

Die Erfindung ist auch beliebig erweiterbar, z.B. für Kraftfahrzeuge, in denen auch für die Fondpassagiere zusätzliche Airbags vorgesehen sind. Jeder einzeln auslösbare Airbag wird dann mit einem erfindungsgemäßen Logikbaustein 20, 20' und den VMOSTransistoren T1, T2 bzw. T1', T2' versehen.

Die Einbindung weiterer Sicherheitseinrichtungen in das Schutzsystem ist ebenfalls möglich. Dies könnte etwa eine zusätzliche Zündpille 1, 2, 3 für einen Gurtstrammer sein, der in Abhängigkeit von einem Zustandsschalter und einem der Ansprechfälle ausgelöst werden soll. In diesem Fall wird lediglich in den Auslösezweig des Gurtstrammers ein weiterer VMOS-Transistor geschaltet, der über einen weiteren Eingang des Logikbausteins 20 bzw. 20' angesteuert wird. Falls die logische Verknüpfung, die die Auslösung steuert, noch nicht in dem Schaltnetzwerk des Logikbausteins 20 bzw. 20' vorhanden ist, kann dieses beliebig erweitert werden.


## Patentansprüche

1. Auslöseschaltung für ein Insassenschutzsystem eines Kfz, mit einer Energiequelle (E) für mindestens einen einzigen Auslöser (1, 2, 3) in einem Auslösezweig (z.B. E-4-a12-1-10-a2-7),

der mindestens einen einzigen Ansprechstufenschalter (4, 5, 6, 7, 8) enthält, der, abhängig von zwei Verzögerungswerten, die einem ersten und zweiten Ansprechfall zugeordnet sind, auf einen ersten oder zweiten Schaltkontakt (a1, a2, a12) gesteuert wird, und

der mindestens einen einzigen, durch einen elektronischen Schalter gebildeten Wahlschalter (10, 11, 12 bzw. T1, T2, T1', T2') aufweist, der abhängig von der Schaltstellung eines Zustandsschalters (91, 92, 93), den Auslöser (1, 2, 3) mit einem der Schaltkontakte (a1, a2, a12) des Ansprechstufenschalters (4, 5, 6, 7, 8) verbindet,

**dadurch gekennzeichnet**, daß

daß Schutzsystem eine eigene Energiequelle (E) aufweist, welche bei einem Ansprechfall die Zündenergie für den / die jeweils betroffenen Auslöser (1, 2, 3) auch nach einem Ausfall der Fahrzeugbatterie liefert, und

daß ein Logikbaustein (20, 20') vorgesehen ist,

. der bei einem Ansprechfall über einen der Schaltkontakte (a1, a2, a12) des Ansprechstufenschalters (4, 5, 6, 7, 8) mit der Energiequelle (E) verbunden wird, und

. der bei einem Ansprechfall den Wahlschalter (T1, T2, T1', T2') steuert.

**2.** Auslöseschaltung nach Patentanspruch 1,
**dadurch gekennzeichnet,**
-daß jeweils mehrere Zustandsschalter (91, 92, 93) und Wahlschalter (T1, T2. T1′, T2′) vorgesehen sind.

**3.** Auslöseschaltung nach Patentanspruch 1 und 2,
**dadurch gekennzeichnet,**
-daß der Wahlschalter (T1, T2. T1′, T2′) jeweils ein VMOS-Transistor ist.


**Claims**

**1.** Trigger circuit for an occupant safety system of a motor vehicle, having an energy source (E) for at least one single trigger (1, 2, 3) in a trigger branch (e.g. E-4-a12-1-10-a2-7),
which contains at least one single response step switch (4, 5, 6, 7, 8) which is driven to a first or second switch contact (a1, a2, a12) dependent on two deceleration values which are assigned to a first and second response case, and
which trigger branch has at least one single selection switch (10, 11, 12 or T1, T2, T1′, T2′) formed by an electronic switch which, dependent on the switch position of a status switch (91, 92, 93), connects the trigger (1, 2, 3) to one of the switch contacts (a1, a2, a12) of the response step switch (4, 5, 6, 7, 8), characterised in that the safety system has an independent energy source (E) which, in the event of a response case, supplies the ignition energy for the trigger(s) (1, 2, 3) concerned in each case, even when the vehicle battery has failed, and in that a logic module (20, 20′) is provided,
- which, in the event of a response case, is connected via one of the switch contacts (a1, a2, a12) of the response step switch (4, 5, 6, 7, 8) to the energy source (E),
and
- which, in the event of a response case, controls the selection switch (T1, T2, T1′, T2′).

**2.** Trigger circuit according to Patent Claim 1, characterised in that in each case a plurality of status switches (91, 92, 93) and selection switches (T1, T2, T1′, T2′) is provided.

**3.** Trigger circuit according to Patent Claim 1 and 2, characterised in that the selection switch (T1, T2, T1′, T2′) is in each case a VMOS transistor.


**Revendications**

**1.** Circuit de déclenchement pour un système de protection de l'occupant d'un véhicule automobile, comportant une source d'énergie (E) pour au moins un seul déclencheur (1,2,3) situé dans une branche de déclenchement (par exemple E-4-a12-1-10-a2-7),
qui comporte au moins un seul interrupteur (4,5,6,7,8) à échelons de déclenchement, qui, en fonction de deux valeurs de décélération qui sont associées à des premier et second cas de déclenchement, est positionné sur un premier ou un second contact de commutation (a1, a2, a12), et
qui comporte au moins un seul interrupteur de sélection (10, 11, 12 ou T1, T2, T1′, T2′) qui est formé par un commutateur électronique et qui, en fonction de la position de commutation d'un interrupteur d'état (91, 92, 93), relie le déclencheur (1, 2, 3) à l'un des contacts de commutation (a1, a2, a12) de l'interrupteur (4, 5, 6, 7, 8) à échelons de déclenchement,
caractérisé par le fait
que le système de protection comporte une source d'énergie (E) qui lui est propre, et qui, dans le cas d'une déclenchement, fournit l'énergie d'amorçage pour le ou pour les déclencheurs (1, 2, 3) concernés, même après une défaillance de la batterie du véhicule automobile, et
qu'il est prévu un module logique (20, 20′),
. qui, dans le cas d'une déclenchement, est relié, par l'intermédiaire de l'un des contacts de commutation (a1, a2, a12) de l'interrupteur (4, 5, 6, 7, 8) à échelons de déclenchement, à la source d'énergie (E), et
. qui, dans le cas d'une déclenchement, commande l'interrupteur de sélection (T1, T2, T1′, T2′).

**2.** Circuit de déclenchement suivant la revendication 1,
caractérisé par le fait

- qu'il est prévu respectivement plusieurs interrupteurs d'état (91, 92, 93) et plusieurs interrupteurs de sélection (T1, T2. T1', T2').

3. Circuit de déclenchement suivant les revendications 1 et 2,
   caractérisé par le fait
   - que chacun des interrupteurs de sélection (T1, T2. T1', T2') est un transistor VMOS.

FIG 1

FIG 2

# FIG 3